# EUROPEAN PATENT APPLICATION

(11) **EP 3 106 352 A1**
(43) Date of publication of application: **21.12.2016**
(21) Application number: 15275154.1
(22) Date of filing: 17.06.2015
(51) Int. Cl.: B60R 13/10

(54) **TAMPER-EVIDENT VEHICLE REGISTRATION PLATE**

(71) Applicant: Bestplate Limited, London WC2B 5AH (GB)
(72) Inventor: McNamee, Tony, Blackpool, Lancashire FY4 3EF (GB)
(74) Representative: Wilson Gunn

(57) **Abstract**

A tamper-evident vehicle registration plate (1) comprises a first sheet of material (5) and a second sheet of material (3), a front surface of the first sheet (5) comprising readable indicia (7) of a vehicle identification code and being adhesively bonded (11) to the second sheet (3). The first sheet (5) comprises one or more lines of weakness (15) extending around the readable indicia (7) so that, in use, a rear surface of the first sheet (5) may be bonded (9, 17) to a support to mount the registration plate on the support such that, if the second sheet (3) is forcibly removed from the support, the first sheet (5) separates along its line(s) of weakness (15) so that the area(s) of the first sheet bounded by a line ofweakness remain(s) bonded to the support, the vehicle identification code (7) is displayed on the support, and the remainder (13) of the first sheet (5) remains bonded to the second sheet (3).

## Description

### Technical Field of the Invention

The present invention relates to tamper-evident vehicle registration plates.

### Background to the Invention

Vehicle registration plates that are forcibly removed from a vehicle may be used illegally to conceal the identity of another vehicle or fraudulently sold to motorists by whom the registration plates will be unusable. It is therefore desirable that a stolen registration plate should be rendered unusable, both to discourage theft of the plates and to prevent the illegal use of stolen plates.

It is an object of embodiments of the present invention to provide an improved tamper-evident vehicle registration plate.

### Summary of the Invention

According to a first aspect of the present invention, there is provided a tamper-evident vehicle registration plate comprising a first sheet of material, the first sheet comprising a front surface, comprising readable indicia of a vehicle identification code, and a rear surface, the front surface being adhesively bonded to an opposing surface of a second sheet of material, wherein the first sheet of material comprises one or more lines of weakness which extend around the readable indicia such that, in use, the rear surface of the first sheet of material may be bonded to a support to mount the registration plate on the support such that, if the second sheet of material is forcibly removed from the support the first sheet of material will separate along the or each line of weakness so that the or each area of the first sheet of material bounded by a line of weakness remains bonded to the support, the vehicle identification code is displayed on the support and the remainder of the first sheet of material remains bonded to the first sheet of material.

Advantageously, a registration plate according to the invention cannot easily be removed from a vehicle with the vehicle identification code intact.

The front surface of the first sheet of material may be reflective and the second sheet of material may be substantially transparent.

A single line of weakness may extend around at least two readable indicia. A single line of weakness may extend around the vehicle identification code. A single line of weakness may extend around a readable area of the first sheet of material. The readable area ofthe first sheet of material may be disposed within a border which extends between the edge of the front surface of the first sheet of material and the line of weakness, the border region forming a non-readable area of the first sheet of material. There may be more than one readable area, each bounded by a line of weakness.

The first sheet of material may be adhesively bonded to the second sheet of material only at regions ofthe surface ofthe first sheet of material which lie outside areas of the material bounded by a line of weakness. The first sheet of material may be adhesively bonded to the second sheet of material such that an adhesive bond of greater strength is formed between the or each area of the surface of the first sheet of material which lie outside areas ofthe material bounded by a line of weakness than any adhesive bond formed between the or each area of the surface of the first sheet of material bounded by a line of weakness.

The readable indicia may be more strongly adhered to the first sheet of material than to the second sheet of material. The readable indicia may be applied to the readable surface by printing.

The registration plate may further comprise a masking layer between the readable indicia and the second sheet of material to restrict adherent bonding between the readable indicia and the second sheet of material. The masking layer may be adhered to the second sheet of material and arranged such that, when the second sheet of material is forcibly removed from the support, the masking layer remains bonded to the second sheet of material. The readable indicia may be bonded to the masking layer such that, when the second sheet of material is forcibly removed from the support, part of the readable indicia remains bonded to the masking layer and the remaining part of the readable indicia remain on the front surface. The part of the readable indicia that remains bonded to the masking layer may comprise a pattern and the part of the readable indicia that remains bonded to the front surface may comprise a negative of the pattern. The pattern may be predefined. The pattern may comprise a message.

The registration plate may further comprise an adhesive layer on the rear surface of the first sheet of material to enable the vehicle registration plate to be bonded to a support, wherein the adhesive layer is arranged to adhesively bond an area or areas ofthe first sheet bounded by the or each line of weakness more strongly to the support than any adhesive disposed in that area or those areas between the first and second sheets of material. The adhesive layer may be shaped to lie only within an area or areas bound by the lines of weakness.

The line or lines of weakness may be formed by perforating and/or by scoring and/or by indentation and/or by cutting of the first sheet of material.

According to a second aspect of the present invention, there may be provided a tamper-evident vehicle registration plate comprising a multi-layered structure, a first layer of the structure forming readable indicia of a vehicle identification code and a second layer being at least partially bonded to the readable indicia, the structure being arranged such that when the second layer is separated from the first layer part of the readable indicia remains bonded to the second layer, wherein the bonding between the first layer and the second layer is arranged such that the remaining part of the readable indicia has a predefined pattern incorporated therein.

The registration plate may further comprise a first sheet of material, the first sheet comprising a front surface to which is adhesively bonded the multi-layered structure, wherein the bond between the first sheet and the multi-layered structure is stronger than the bond between the first layer and the second layer.

The registration plate may further comprise a second sheet of material which is bonded to an opposite side of the multi-layered structure to the first sheet of material, wherein the bond between the second sheet and the multi-layered structure is stronger than the bond between the first layer and the second layer.

The front surface of the first sheet of material may be adhesively bonded to an opposing surface of the second sheet of material and the multi-layered structure may be arranged between the first sheet and the second sheet to form readable indicia and wherein, if the second sheet of material is forcibly removed from the first sheet of material, the second layer remains bonded to the second sheet of material.

According to a third aspect of the present invention there is provided a vehicle comprising a tamper-evident vehicle registration plate according to the first or second aspects.

### Detailed Description of the Invention

In order that the invention may be more clearly understood embodiments thereof will now be described, by way of example only, with reference to the accompanying drawings, of which:
- Figure 1: shows an exploded view of a vehicle registration plate according to a first embodiment of the invention;
- Figure 2: shows an enlarged schematic cross section of the assembled plate shown in Figure 1 affixed to a vehicle;
- Figure 3: shows a part of the registration plate shown in Figure 1 in a separated configuration;
- Figure 4: shows the other part of the registration plate shown in Figure 1;

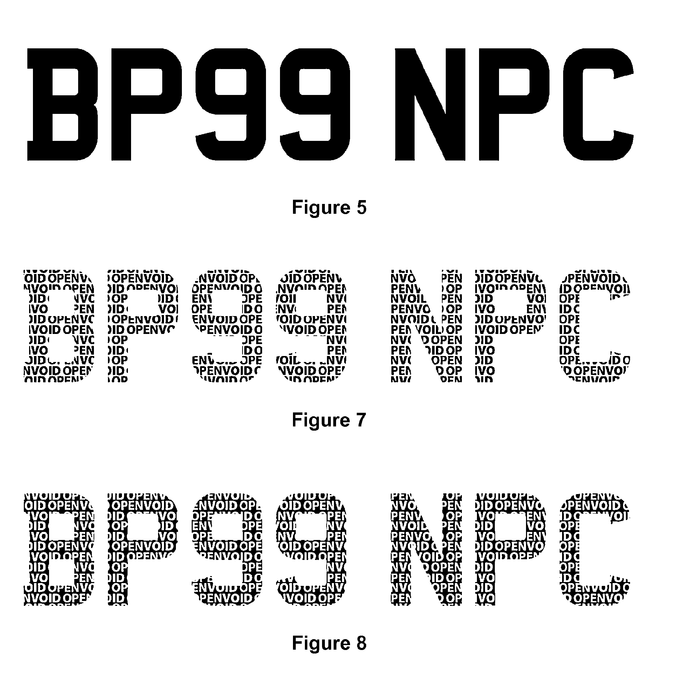

- Figure 5: shows a registration code of a registration plate according to a second embodiment of the invention;

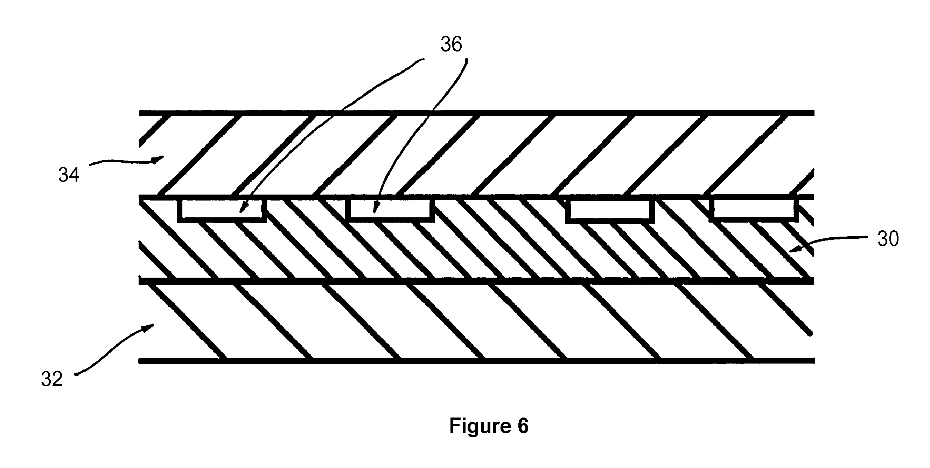

- Figure 6: shows an enlarged schematic cross section of part of the registration code shown in Figure 5;
- Figure 7: shows part of the registration code shown in Figure 5; and
- Figure 8: shows the other part of the registration code shown in Figure 5 which is the negative of the part shown in Figure 7.

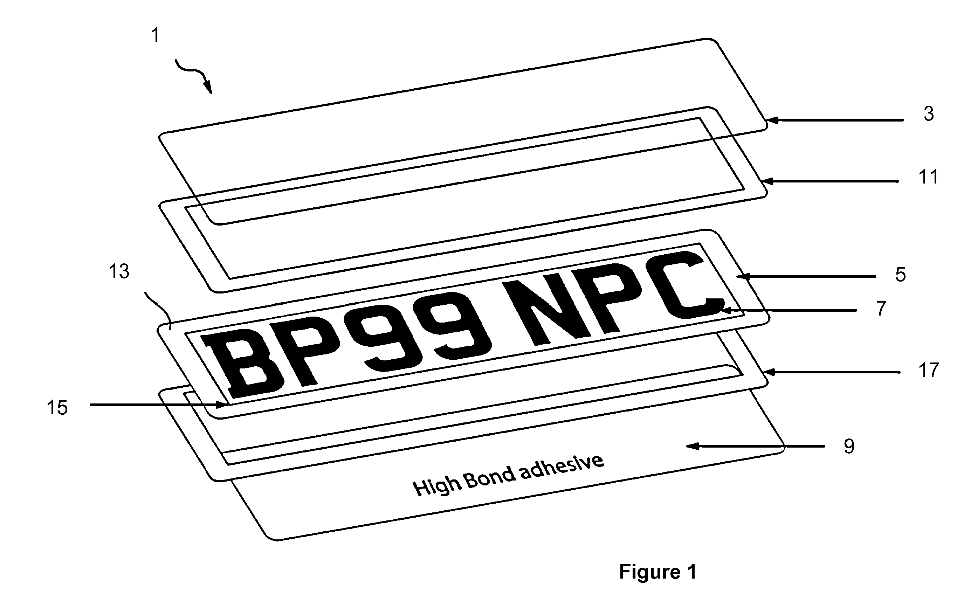

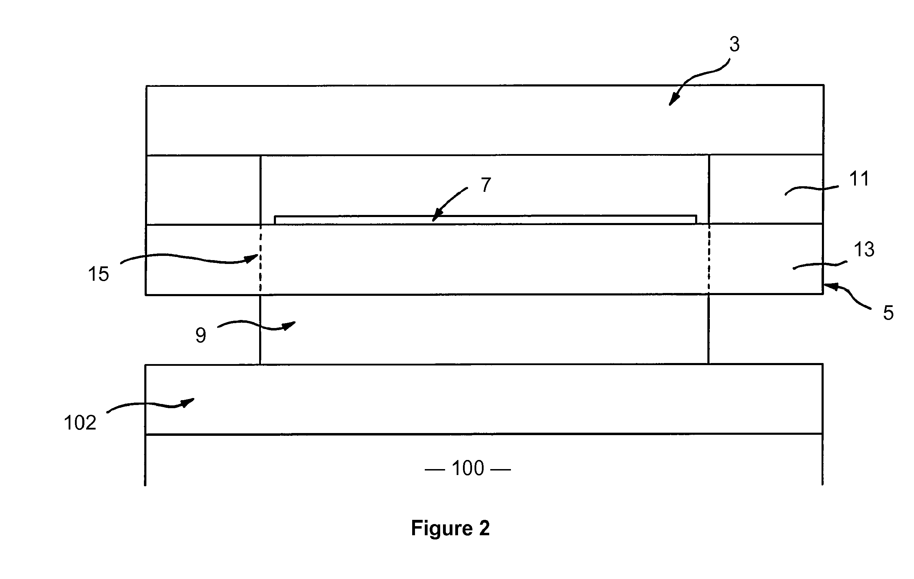

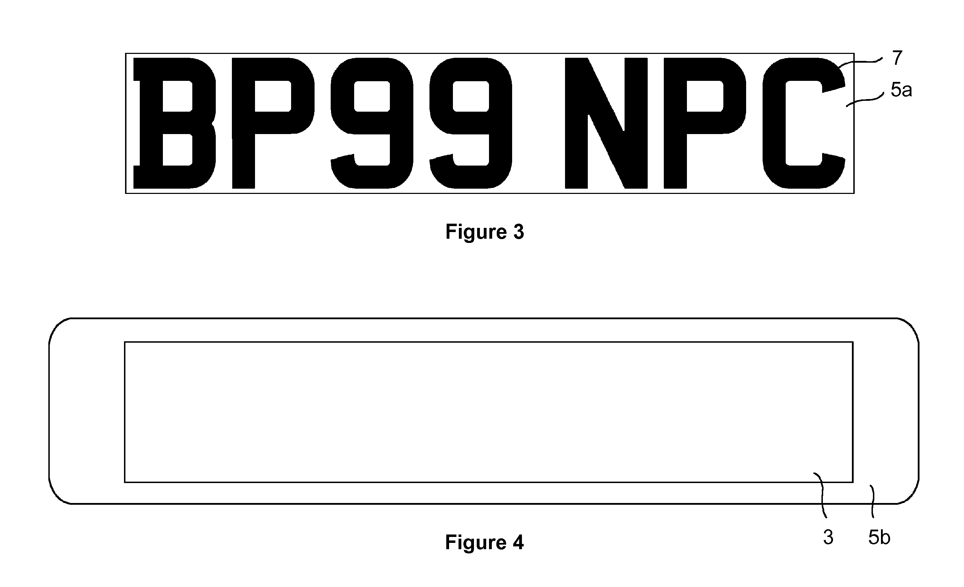

With reference to figures 1 to 4 of the drawings, there is shown a tamper-evident vehicle registration plate 1. This comprises an elongate substantially rectangular transparent acrylic cover plate 3, a central, opaque, reflective sheet 5 of substantially the same size and shape as the cover plate and to which is applied a plurality of readable indicium 7 which form a registration code. A sheet or pad 9 of high bond adhesive is disposed behind the reflective sheet to enable the registration plate to be adhered to a vehicle 100 or a backing plate 102 mounted to the vehicle 100.

The readable indicium 7 are applied to the reflective sheet 5 as a dry transfer print or using any suitable print method, such as screen printing, laser printing, laser marking, lithographic printing, adhesive backed wet transfer, flexographic printing, thermal transfer printing, latex printing and inkjet printing. The registration code is applied in a colour that legibly contrasts with the reflective surface, typically black ink or any other contrasting colour where permitted or mandated in the jurisdiction where the registration plate will be used. The registration code is substantially located within a readable area of the reflective sheet 5, the readable area being a substantially rectangular area of the sheet which lies within a non-readable border region 13, of substantially constant width, which extends around the periphery of the sheet.

The reflective sheet 5 is adhered to the acrylic plate 3 by a transparent adhesive 11 disposed only, or substantially only, within the border, non-readable, region 13 of the reflective sheet 5 and a corresponding region of the cover plate 3. Thus, the reflective sheet 5 and cover plate 3 are adhered together only at regions of the surface of the reflective sheet 5 that are outside of the readable area comprising the registration code.

In other embodiments, though, the reflective sheet 5 is additionally adhered to the cover plate 3 over the readable area of the reflective sheet 5. In these embodiments it desirable that the adhesive bond formed between the cover plate and the readable area of the reflective sheet is less strong than the adhesive bond between the cover plate and the non-readable area of the reflective sheet. In all such embodiments any adhesive bond between indicia in the readable area and the cover plate 3 is weaker than the bond between the indicia and the reflective sheet 5. A substantially transparent masking layer (not shown) can optionally be interposed between the adhesive layer 11 and the reflective sheet 5 or between the adhesive layer 11 and the cover plate 3 in the readable area to prevent or limit adherence of the acrylic plate 3 to the reflective sheet 5 in the readable area.

The reflective sheet 5 is divided or weakened by a line of perforations 15 which form a line of weakness in the sheet extending around the border between the readable and non readable areas, and thus extending entirely around the registration code. Whilst perforations are used in this embodiment to create a line of weakness in the reflective sheet 5, other methods of weakening the reflective sheet are envisaged such as by indentation, scoring or kiss cutting. The scoring, cutting or perforations may be made using a blade, cutting forme, laser or any suitable cutting means. The indentations maybe embossed using pressure from a stamp or cutting forme, or any suitable means. The scoring, perforations or indentations may be made to the reflective sheet before or after it is adhered to the cover plate.

The adhesive pad 9 is sized, shaped and positioned such that when it is adhered to the reflective sheet 5, it lies only within and substantially covers the area or areas bounded by the perforations 15. The bond formed between the pad 9 and the reflective sheet 5 is greater than the strength of any bond between the readable area ofthe reflective sheet 5 and the cover plate 3 so that, if the cover plate 3 is removed from the reflective sheet 5, the readable area of the reflective sheet 5 remains adhered to the pad 9 in preference to the cover plate. However, the bond between the cover plate 3 and the non-readable area ofthe reflective sheet is sufficiently strong that the non-readable area 13 of the reflective sheet 5 remains adhered to the cover plate 3 and separates fromthe readable area of the reflective sheet along the perforations 15 in preference to detaching from the cover plate. Thus, in use, when the registration plate is adhered to a vehicle by way ofthe adhesive pad 9, if an attempt is made to remove the registration plate from the vehicle the cover plate 3 will separate from the vehicle along with the non-readable part of the reflective sheet 5, leaving the readable area ofthe reflective sheet 5 and the registration code on the vehicle.

Optionally, the non-readable area of the reflective sheet 5 may additionally be adhered to a vehicle or backing plate by an adhesive layer, shown as 17 in figure 1, which forms a bond between the non-readable area 13 of the reflective sheet and the backing plate or vehicle which is weaker than the bond between the non-readable area of the reflective sheet 5 and the cover plate 3, in order that the non-readable area of the reflective sheet remains adhered to the cover plate 3 when it is detached fromthe backing plate.

In a second embodiment, the readable indicia 7 are formed from a proprietary multi-layered structure or tape. The tape has a first layer 30 comprising coloured dye or pigment which is formed into desired readable indicium and bonded to a backing layer 32. A third layer of film 34 made from a substantially transparent polymeric material is bonded to the side of the readable indicia opposite the backing layer such that the readable indicia are sandwiched between the two layers.

A plurality of blocking layers 36 is interposed between the readable indicia 7 and the transparent film 34 and arranged to prevent or at least restrict bonding between the readable indicia 7 and the transparent film 34 at these specified regions. The bond between the transparent film 34 and the indicia 7 is stronger than the bond between the indicia 7 and the backing layer 32 except in the regions of the blocking layers 36 so that, if the transparent film 34 is separated from the backing layer 32, all parts of the indicia not separated fromthe transparent film 34 by the blocking layers 36 remain bonded to the transparent film 34 and all parts ofthe indicia 7 separated from the transparent film 34 by the blocking layers 36 remain bonded to the backing layer 32.

The blocking layers 36 are arranged in a repeating pattern between the readable indicia 7 and the transparent film 34. In this embodiment, the pattern is chosen to repeatedly spell the word 'OPEN VOID' so that, upon separation of the transparent film from the backing layer, the part of the indicia that remains on the backing layer repeatedly spells 'OPEN VOID' and the part of the indicia that remains on the transparent film forms a negative of the words 'OPEN VOID'.

The material forming the readable indicia 7, backing layer 32 and the transparent film 34 may be adhered together to facilitate forming the indicia 7 and affixing them to the reflective sheet 5. The transparent film 34 is adhered to the cover plate 3, and the backing layer 32 affixed to the reflective sheet 5, with a bond which is greater in strength than any bond between the transparent sheet 34 and the indicia 7 or the backing layer 32 and the indicia 7. So, when the cover plate 3 is removed from the reflective sheet 5, the transparent film 34, and hence negative of the pattern of the readable indicia 7, is removed with the cover plate 3 leaving the repeating pattern of the remaining indicia 7on the reflective sheet 5. Then the indicia 7 will be visible on both the reflective sheet 5 and the cover plate 3 but in each case the pattern formed in the indicia 7 and the transparent plate 3 will be visible, indicating that the registration plate 1 has been tampered with.

It will be appreciated that indicia formed by a pattern and covered by a transparent sheet arranged to conceal that pattern can be employed whether or not the non-readable area of the reflective sheet is arranged to detach from the readable part when the cover plate is removed from the reflective sheet.

Such indicia may be formed by cutting them out from a sheet of security material, such as security tape, comprising two layers bonded together, a first layer comprising a first pattern and a second, transparent, layer comprising a negative pattern and aligned with the first sheet to form a sheet which is substantially opaque overall.

The above embodiments are described by way of example only. Many variations are possible without departing from the scope ofthe invention as defined in the appended claims.

## Claims

1. A tamper-evident vehicle registration plate comprising a first sheet of material, the first sheet comprising a front surface, comprising readable indicia of a vehicle identification code, and a rear surface, the front surface being adhesively bonded to an opposing surface of a second sheet of material, wherein the first sheet of material comprises one or more lines of weakness which extend around the readable indicia such that, in use, the rear surface of the first sheet of material may be bonded to a support to mount the registration plate on the support such that, if the second sheet of material is forcibly removed from the support the first sheet of material will separate along the or each line of weakness so that the or each area of the first sheet of material bounded by a line of weakness remains bonded to the support, the vehicle identification code is displayed on the support and the remainder of the first sheet of material remains bonded to the first sheet of material.

2. A tamper-evident vehicle registration plate as claimed in claim 1 wherein the front surface of the first sheet of material is reflective and the second sheet of material is substantially transparent.

3. A tamper-evident vehicle registration plate as claimed in either claim 1 or 2, wherein a single line of weakness extends around at least two readable indicia.

4. A tamper-evident vehicle registration plate as claimed in any preceding claim wherein a single line ofweakness extends around the vehicle identification code.

5. A tamper-evident vehicle registration plate as claimed in any preceding claim wherein a single line of weakness extends around a readable area of the first sheet of material.

6. A tamper-evident vehicle registration plate as claimed in claim 5 wherein the readable area of the first sheet of material is disposed within a border which extends between the edge ofthe front surface ofthe first sheet of material and the line of weakness, the border region forming a non-readable area of the first sheet of material.

7. A tamper-evident vehicle registration plate as claimed in any preceding claim wherein the first sheet of material is adhesively bonded to the second sheet of material only at regions of the surface of the first sheet of material which lie outside areas of the material bounded by a line of weakness.

8. A tamper evident vehicle registration plate as claimed in any of claims 1 to 7 wherein the first sheet of material is adhesively bonded to the second sheet of material such that an adhesive bond of greater strength is formed between the or each area of the surface of the first sheet of material which lie outside areas of the material bounded by a line of weakness than any adhesive bond formed between the or each area of the surface of the first sheet of material bounded by a line of weakness.

9. A tamper-evident vehicle registration plate as claimed in any preceding claim, wherein the readable indicia are more strongly adhered to the first sheet of material than to the second sheet of material.

10. A tamper-evident vehicle registration plate as claimed in any preceding claim, wherein the readable indicia are applied to the readable surface by printing.

11. A tamper-evident vehicle registration plate as claimed in any preceding claim, further comprising a masking layer between the readable indicia and the second sheet of material to restrict adherent bonding between the readable indicia and the second sheet of material.

12. A tamper-evident vehicle registration plate as claimed in claim 11, wherein the masking layer is adhered to the second sheet of material and arranged such that, when the second sheet of material is forcibly removed from the support, the masking layer remains bonded to the second sheet of material.

13. A tamper-evident vehicle registration plate as claimed in any preceding claim, further comprising an adhesive layer on the rear surface of the first sheet of material to enable the vehicle registration plate to be bonded to a support, wherein the adhesive layer is arranged to adhesively bond an area or areas of the first sheet bounded by the or each line of weakness more strongly to the support than any adhesive disposed in that area or those areas between the first and second sheets of material.

14. A tamper-evident vehicle registration plate as claimed in any preceding claim, wherein the line or lines of weakness are formed by perforating and/or by scoring and/or by indentation and/or by cutting of the first sheet of material.

15. A vehicle comprising a tamper-evident vehicle registration plate according to any preceding claim.
